## Europäisches Patentamt

## European Patent Office

## Office européen des brevets

(11) Numéro de publication: **0 223 682**
**B1**

(12) **FASCICULE DE BREVET EUROPÉEN**

(45) Date de publication du fascicule du brevet:
06.12.89

(21) Numéro de dépôt: **86402414.6**

(22) Date de dépôt: **28.10.86**

(51) Int. Cl.⁴: **G 01 H 3/12**

(54) **Dispositif de cartographie sonore.**

(30) Priorité: **30.10.85 FR 8516152**

(43) Date de publication de la demande:
**27.05.87 Bulletin 87/22**

(45) Mention de la délivrance du brevet:
**06.12.89 Bulletin 89/49**

(84) Etats contractants désignés:
**AT BE CH DE ES GB IT LI LU NL SE**

(56) Documents cité:
**EP-A-0 068 627**
**EP-A-0 122 074**
**FR-A-2 473 174**
**US-A-4 307 385**

(73) Titulaire: **ELECTRICITE DE FRANCE Service National, 2, rue Louis Murat, F-75008 Paris (FR)**

(72) Inventeur: **Marchandiaux, Michel, 51, Boulevard Foch, F-38100 Grenoble (FR)**
Inventeur: **Tourneur, Alain, 8, rue Bergonié, F-38100 Grenoble (FR)**
Inventeur: **Bochu, Michel, 642, Avenue Jacques Prévert, F-38040 Voreppe (FR)**
Inventeur: **Jost, Bernard, La Marquisière, F-28400 Margon (FR)**

(74) Mandataire: **Martin, Jean-Jacques, Cabinet REGIMBEAU 26, Avenue Kléber, F-75116 Paris (FR)**

**Description**

La présente invention est relative à un dispositif de cartographie sonore.

L'environnement industriel et urbain se voit actuellement confronté avec une acuité croissante au problème de la lutte contre les effets indésirables de l'activité quotidienne. Parmi ceux-ci, la maîtrise des niveaux sonores de machines ou d'installations apparaît de plus en plus nécessaire et les investissements indispensables à l'obtention de celle-ci de plus en plus importants, en vue notamment d'assurer la conformité de ces machines ou installations à des normes et réglementations de plus en plus strictes.

L'obtention de la maîtrise des niveaux sonores ou niveaux de bruits pose le problème délicat de la mesure in situ de ces derniers et de leur comparaison dans des conditions d'expérimentation comparables, afin d'obtenir des cartes de niveaux de bruit relatives à des zones sensibles à protéger ou à surveiller.

Actuellement, la mesure de niveaux de bruit est normalement effectuée au moyen d'appareils de type sonomètre, ceux-ci étant avant tout orientés vers des utilisations en laboratoire, à titre plutôt préventif, ou en tout cas vers des utilisations de type dosimètre, c'est-à-dire utilisation dans laquelle l'appareil permet d'obtenir une mesure indicative de dose de bruit reçue par un sujet porteur de cet appareil pendant une durée déterminée. Ce type d'appareil dans l'utilisation précitée a fait l'objet d'une demande de brevet français n° 2 473 174.

Ce type d'appareillage ne permet cependant pas d'effectuer de mesures de contrôle in situ d'une installation, ni a fortiori un relevé de cartographie sonore.

Les sonomètres utilisés actuellement pour l'établissement de cartes de bruit fonctionnant sur un principe analogue, ne permettent cependant pas un relevé de mesures fiables et sont en tout cas sujets à des risques d'erreur importants, notamment au niveau de la transcription des résultats, la mise en oeuvre de ce type d'appareil nécessitant, en outre, deux opérateurs.

Plus récemment, des dispositifs de mesure de niveau de bruits ont été décrits dans le document EP-A-0 088 627 et US-A-4 307 385.

Si le document EP-A-0 088 627 décrit un appareil de mesure de relevé et de contrôle de niveau de bruit, celui-ci est destiné à être utilisé au niveau de points caractéristiques d'une machine. Ainsi, les coordonnées et le niveau sonore correspondant ne sont pas adaptés à constituer une variable de cartographie sonore pour un enregistrement conditionnel. Ce type d'appareil ne peut raisonnablement être utilisé pour réaliser des opérations de cartographie sonore par enregistrement conditionnel.

Le document US-A-4 307 385 concerne un appareil de mesure de niveau et de dose de bruit destiné à protéger un individu se trouvant dans des conditions de niveau de bruit néfastes ou dangereuses. Bien que ce dispositif permette le déclenchement d'un système d'alarme par rapport à un niveau de seuil de référence, ce dispositif ne peut réaliser la fonction cartographie puisque la référence spatiale de mesure de niveau de bruit est bien l'individu lui-même et non l'endroit où se trouve celui-ci.

La présente invention a pour but de remédier aux inconvénients précités par la mise en oeuvre d'un dispositif de cartographie sonore.

Un autre objet de la présente invention est la mise en oeuvre d'un dispositif de cartographie sonore d'un très grand degré de fiabilité et de fidélité.

Un autre objet de la présente invention est la mise en oeuvre d'un dispositif de cartographie sonore portable et de mise en oeuvre, celle-ci pouvant être effectuée par un seul opérateur.

Le dispositif de cartographie sonore, objet de la présente invention, est remarquable en ce qu'il comprend des moyens d'affichage par un opérateur des coordonnées représentatives de chaque point de l'espace de relevé de niveau sonore, les coordonnées étant engendrées sous forme numérisée et des moyens d'affichage du niveau sonore audit point de l'espace de relevé de niveau sonore. Des moyens d'enregistrement conditionnel du niveau sonore et des coordonnées sont en outre prévus, les coordonnées et le niveau sonore correspondant, constituant pour chaque point de relevé la variable de cartographie sonore et l'ensemble des variables de cartographie constituant l'information de cartographie mémorisée.

L'invention trouve application dans tous les sites ou chantiers industriels ou urbains en particulier dans tous les sites industriels de production d'énergie par machines tournantes, ainsi que dans les sites industriels à environnement à haut niveau sonore dans lesquels des essais en chambre anéchoïde doivent être effectués.

Elle sera mieux comprise à la lecture de la description et à l'observation des dessins ci-après dans lesquels:

- La figure 1 représente un schéma synoptique fonctionnel du dispositif objet de l'invention,
- la figure 2 représente un schéma général structurel d'un mode de réalisation du dispositif de l'invention, conformément à la figure 1,
- la figure 3 représente un détail de réalisation d'un des éléments représentés en figure 2,
- la figure 4 représente un détail de réalisation d'un autre élément représenté en figure 2,
- les figures 5 et 6 représentent des modes de réalisation particuliers de l'affichage et d'un autre élément essentiel du dispositif objet de l'invention,
- la figure 7 et la figure 8 représentent respectivement un organigramme général du processus de gestion du dispositif selon l'invention et un organigramme spécifique à la mesure et à l'affichage des valeurs de mesure de bruit.

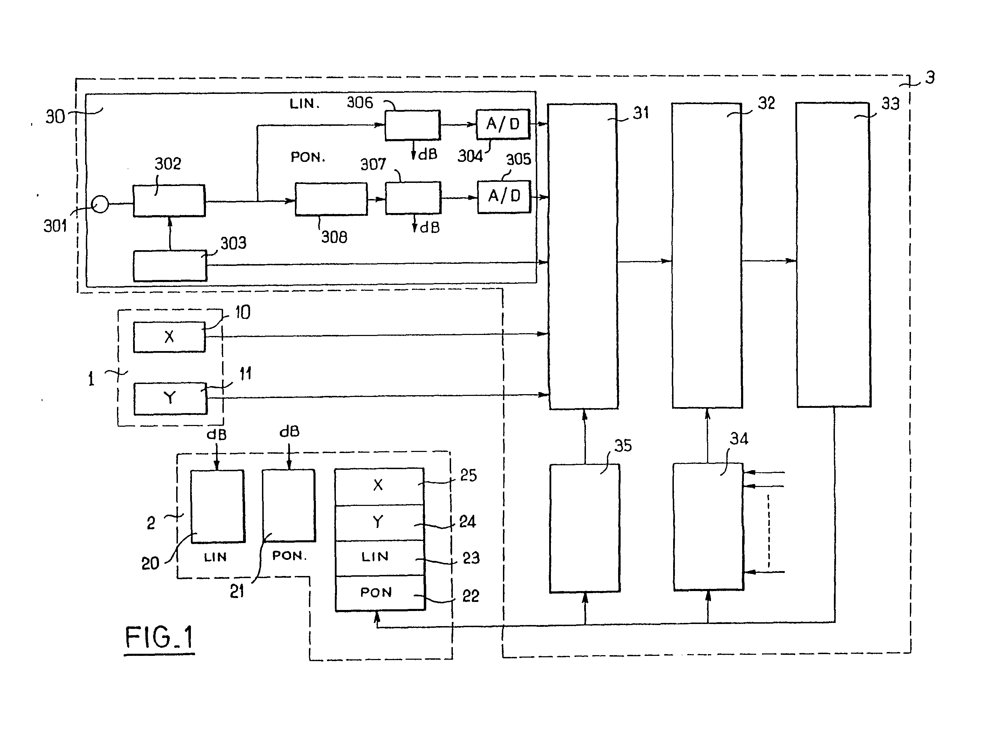

Le dispositif de cartographie sonore objet de l'invention sera tout d'abord décrit en liaison avec le schéma synoptique fonctionnel représenté en figure 1.

Selon cette figure, le dispositif de l'invention comprend avec des moyens de détection de niveau sonore sous forme numérisée, des moyens d'affichage, notés 1, par un opérateur, des coordonnées représentatives de chaque point de l'espace de relevé de niveau sonore. Ces coordonnées sont engendrées sous forme numérisée et peuvent constituer, bien entendu, en des coordonnées de toute nature telles que coordonnées cartésiennes, coordonnées polaires, ou même simple référence codée représentative d'un emplacement déterminé de l'espace de relevé de niveau sonore. Sur la figure 1, on a représenté à titre d'exemple non limitatif, des moyens d'affichage 1 dans lesquels deux valeurs X, Y sont susceptibles de représenter tout point d'un espace plan de relevé de niveau sonore. Bien entendu, le dispositif de l'invention peut comporter un système d'affichage et d'introduction des coordonnées, par un opérateur, comportant trois entrées en vue, si nécessaire, d'effectuer l'enregistrement de niveau sonore dans un espace à trois dimensions. A titre d'exemple de réalisation non limitatif, les moyens 1 d'affichage et d'introduction par un opérateur des coordonnées précitées peuvent être constitués par un système de roues codeuses 10, 11, suivies d'un système de numérisation non représenté en figure 1, ou par tout système analogue.

Le dispositif de l'invention comprend en outre des moyens 2 d'affichage du niveau sonore au point de l'espace de relevé de niveau sonore. Sur la figure 1, les moyens 2 d'affichage du niveau sonore sont représentés de façon à comporter des afficheurs 20 et 21 directement connectés aux moyens de détection de niveau sonore précités, ces afficheurs permettant à partir du signal analogique issu de la détection de niveau sonore, un affichage des niveaux sonores détectés après détection linéaire et/ou soumise à pondération, ainsi qu'il sera décrit ultérieurement dans la description.

Le dispositif selon l'invention comporte, en outre, des moyens 3 d'enregistrement conditionnels du niveau sonore détecté et des coordonnées précitées, les coordonnées et le niveau sonore correspondants constituant pour chaque point de relevé la variable de cartographie sonore et l'ensemble des variables de cartographie sonore constituant l'information sonore mémorisée.

Sur la figure 1, on a également représenté, selon un mode de réalisation non limitatif, les moyens d'affichage 2 du niveau sonore, dans lesquels des unités d'affichage numérique 22, 23, 24, 25 sont prévues, ces unités d'affichage numérique étant reliées aux moyens 3 d'enregistrement conditionnel du niveau sonore et des coordonnées. Les unités d'affichage numérique peuvent être constituées de manière non limitative par des cellules d'affichage à cristaux liquides ou analogues.

On notera ci-après le fonctionnement du dispositif objet de l'invention. Selon le principe de fonctionnement le plus général, dès la mise sous tension par l'opérateur, l'appareil effectue et affiche en permanence au niveau des afficheurs 20 et 21 précités, la mesure des niveaux de bruit ou niveaux sonores linéaire et pondéré. L'indication analogique sur les afficheurs précités, disposés de préférence sur la face avant de l'appareil, permet à l'opérateur de vérifier ces niveaux et éventuellement de régler le niveau détecté au moyen d'un système atténuateur. L'opérateur affiche ensuite, au moyen des moyens d'affichage 1, les coordonnées du point de mesure, lesquelles sont introduites sous forme numérisée dans les, moyens d'enregistrement conditionnel.

L'opérateur commande alors le déclenchement d'une mesure proprement dite et le dispositif indique au niveau des quatre unités d'affichage numérique 22, 23, 24, 25, les quatre valeurs correspondantes à la valeur de niveau sonore pondéré, linéaire, et aux coordonnées effectivement introduites. L'opérateur peut ainsi vérifier globalement la validité des quatre paramètres avant d'effectuer leur enregistrement proprement dit.

Une description plus détaillée des moyens 3 d'enregistrement conditionnels sera donnée en liaison avec la figure 1. Sur cette figure, les moyens 3 d'enregistrement conditionnel sont réputés comporter des moyens de détection de niveau sonore sous forme numérisée notés 30, une interface 31 capable d'assurer la liaison entre les circuits ou moyens de détection 30, 1 délivrant la variable de cartographie et les circuits d'enregistrement proprement dits, une unité centrale de gestion 32 des variables de cartographie recevant celles-ci par l'intermédiaire de l'interface 31 et un registre de commande 33 et de mémorisation 35 des variables précitées constituant les circuits d'enregistrement proprement dits. En outre, les moyens 3 d'enregistrement conditionnel comportent une unité de commande de test 34, munie d'un clavier à partir duquel l'ensemble des opérations de commande peut être effectué par l'opérateur. Sur la figure 1, le clavier est représenté par les flèches adjacentes au bloc 34.

A titre d'exemple non limitatif, les moyens 30 de détection de niveau sonore peuvent comprendre un microphone 301 relié à un amplificateur 302, lequel délivre le signal de niveau sonore détecté à deux chaînes parallèles. La première chaîne comporte un filtre 308 permettant d'effectuer une pondération en fréquence par exemple du signal détecté, un circuit 307 de mesure de la valeur efficace du signal délivré par le filtre 308, donc après pondération, et un convertisseur analogique/numérique 305, délivrant le signal numérisé correspondant à l'interface 31. Le circuit de mesure de la valeur efficace 307 commande directement l'afficheur 21. On notera en particulier que le filtre 308 inséré dans la première chaîne précitée peut être constitué par tout filtre ou par une batterie de filtres susceptible d'opérer une pondération définie comme pondération A, B, C ou même pondération D dans le cas de la mesure de niveau de bruit provoquée par des aéronefs, par la norme française NF S 31-009.

La deuxième chaîne de détection comprend un circuit de mesure de la valeur efficace du niveau sonore 306, recevant le signal délivré par l'amplificateur 302 et un convertisseur analogique/numérique 304, délivrant lui-même le signal correspondant numérisé à l'interface 31. La deuxième chaîne de détection permet ainsi l'élaboration d'un signal de niveau sonore détecté correspondant à la caractéristique LIN de réponse constante en fréquence, telle que définie par la norme française précitée.

Un atténuateur 303 permet le réglage du niveau d'amplification de l'amplificateur 302, la valeur d'atténuation étant bien entendu transmise à l'interface 31.

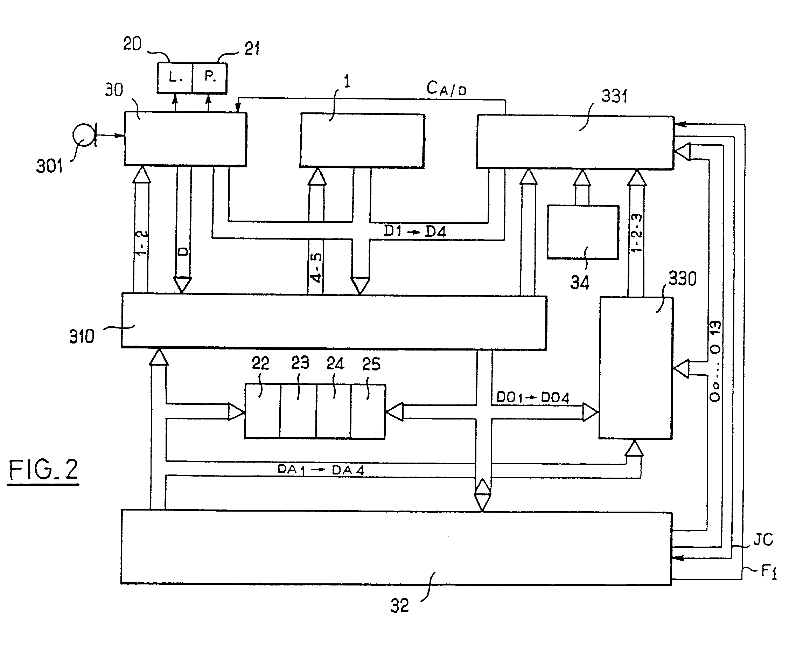

Un mode de réalisation avantageux du dispositif de l'invention et une implantation correspondante des éléments structurels de celui-ci sera donné en liaison avec la description de la figure 2, ce mode de réalisation étant conforme au schéma synoptique de la figure 1.

Selon l'implantation précitée, l'interface 31 comprend un multiplexeur de données 310, recevant le signal représentatif du niveau sonore détecté sous forme numérique et le signal de valeur des coordonnées du point de relevé considéré également sous forme numérique. Ces deux signaux numériques sont transmis au multiplexeur 310 par le BUS D1 - D4 représenté sur la figure 2. Le multiplexeur 310 peut être constitué par tout multiplexeur numérique, disponible normalement dans le commerce, à quatre bits d'entréesérie et seize bits de sortie parallèle et réciproquement. Le multiplexeur 310 est également relié au circuit de détection 30 par l'intermédiaire d'un BUS D délivrant au multiplexeur les valeurs efficaces du niveau sonore appliquées aux afficheurs 20 et 21, sous forme numérisée, et par un BUS de commande noté 1 - 2, permettant la sélection de la carte ou de la chaîne analogique de détection linéaire ou pondérée. En outre, le multiplexeur 310 est également relié au moyen d'affichage 1 par un BUS de commande noté 4 - 5, à l'unité centrale 32 par l'intermédiaire d'un premier BUS de commande d'adresse noté DA1 - DA4 et par un deuxième BUS de données après multiplexage noté DO1 - DO4. Les afficheurs 22, 23, 24, 25 sont également reliés aux deux BUS précités.

Ainsi qu'il apparaît en outre en figure 2, le registre de mémorisation 33 est de préférence constitué par un registre de commande 330 relié au BUS de commande d'adresse DA1 - DA4 et au BUS de données après multiplexage DO1 - DO4, ainsi qu'une unité de mémorisation et de test 331 reliée d'une part au registre de commande 330 par un BUS de commande noté 1 - 2 - 3, le registre de commande 330 et l'unité de mémorisation et de test 331 étant commandés par l'unité centrale 32, par l'intermédiaire d'un BUS de commande d'ordre noté 00...013. L'unité de mémorisation 331 reçoit les variables de cartographie sur commande du registre de commande 330 par l'intermédiaire du BUS D1 - D4. L'unité de mémorisation et de test 331 est en outre reliée par une connexion de déclenchement de conversion analogique/numérique au circuit de détection 30, commande notée $C_{A/D}$ ,au multiplexeur 310 par un BUS d'activation des circuits mémoires à la mise sous tension du dispositif, BUS noté 3, à l'unité de commande de test 34, à l'unité centrale par une connexion de commande JC permettant la validation de l'unité centrale et par une commande F1 à cette même unité centrale permettant la commande de mise en mémoire proprement dite des variables de cartographie.

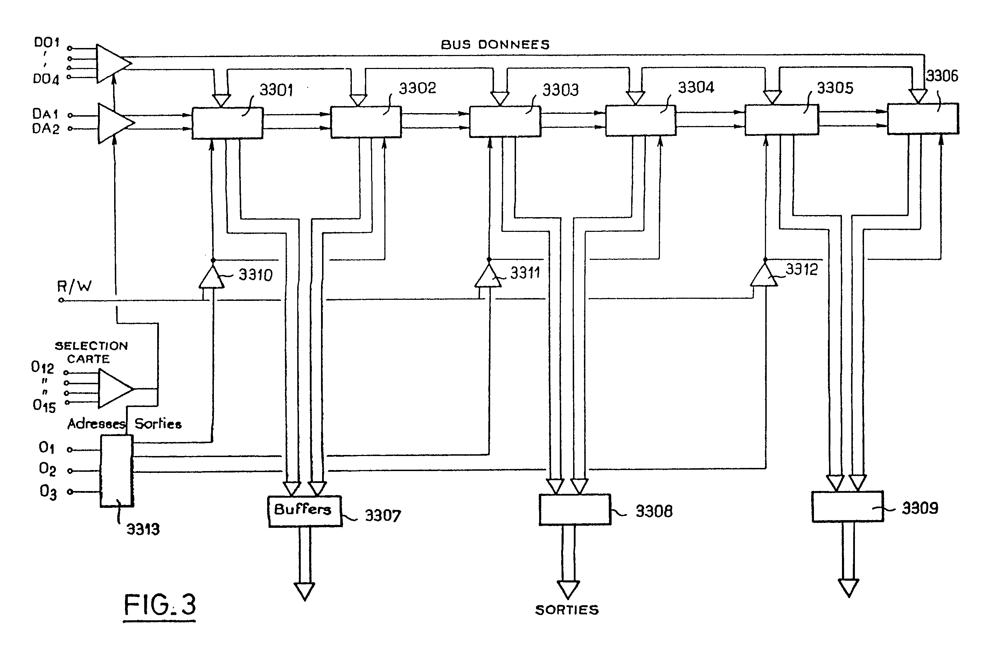

Ainsi qu'il apparaît en figure 3, le registre de commande 330 peut comporter, à titre d'exemple, un ensemble de circuits mémoires notés 3301, 3302, 3303, 3304, 3305 et 3306, lesquels sont alimentés directement en parallèle par le BUS de données DO1 - DO4. Le chargement des mémoires précitées est effectué à partir des commandes d'adresse DA1 - DA2, un ordre d'inscription et de lecture étant donné aux mémoires précitées sur un ordre R/W par l'intermédiaire de portes logiques 3310, 3311, 3312, sur coïncidence avec les commandes d'ordre délivrées par le BUS de commande d'ordre 01, 02, 03, par l'intermédiaire d'un circuit de mise en forme 3313. Des mémoires tampons 3307, 3308, 3309 permettent d'emmagasiner,sur ordre de sélection dit ordre de sélection de carte délivré par le BUS 012 - 015, les informations de commande délivrées par le BUS de commande 1 - 2 - 3 à l'unité de mémorisation et de test 331.

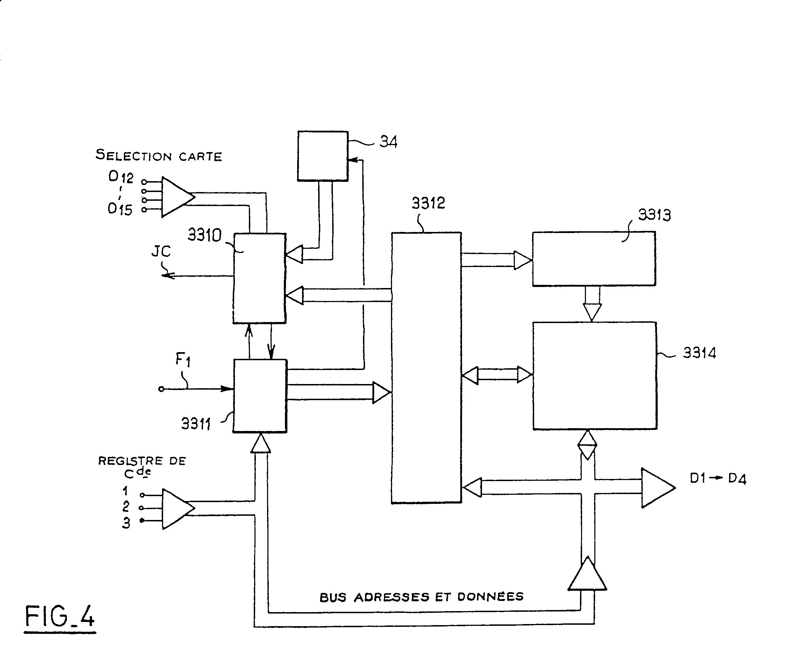

Ainsi qu'il apparaît en outre en figure 4, l'unité de mémorisation et de test 331 précitée comprend une unité logique de contrôle 3312, commandée à partir d'un multiplexeur de commande 3311, recevant la commande F1 déjà citée de l'unité centrale de gestion 32. L'unité de mémorisation et de test 331 comprend en outre un compteur-décompteur 3313 commandé par l'unité logique de contrôle, et une mémoire morte programmable électriquement 3314 reliée au compteur 3313 et à la logique de contrôle 3312. La mémoire de type mémoire morte est destinée à mémoriser les variables de cartographie, de façon à constituer l'information de cartographie. Le compteur-décompteur a pour fonction, préalablement à chaque enregistrement proprement dit, d'incrémenter ou de décrémenter les adresses auxquelles les variables de cartographie seront effectivement enregistrées. Bien entendu, la mémoire morte programmable électriquement 3314 reçoit les données et les adresses constituant les variables de cartographie par l'intermédiaire du BUS D1 - D4 précité, et du BUS issu du registre de commande BUS 1 - 2 - 3. En outre, l'unité de mémorisation et de test 330 comprend un multiplexeur de test 3310, commandé par l'unité centrale par l'intermédiaire du BUS de commande 012 - 015 et relié à la logique de contrôle 3312 et au multiplexeur de commande 3311. Le multiplexeur de test 3310 permet d'élaborer le signal JC sélectionnant le type d'ordre engendré par l'unité centrale de gestion 32. On remarquera en outre que le clavier de l'unité de test 34 est direc-

tement relié au multiplexeur de test 3310.

La logique de contrôle 3312 a pour fonction la mise en forme et le formatage des données préalablement à leur enregistrement. La logique de contrôle peut être constitué par des circuits de type classique, lesquels ne seront pas décrits car n'entrant pas dans l'objet de la présente invention. Le multiplexeur de test 3310 permet, en particulier de retrouver l'adresse de la dernière valeur de cartographie enregistrée, ce qui permet, notamment, la comparaison de la variable de cartographie courante après validation de l'enregistrement par l'opérateur au dernier enregistrement effectué dans la mémoire morte 3314.

A titre d'exemple non limitatif, la mémoire morte 3314 peut être constituée par une unité de type cassette enfichable autorisant 2000 mesures de quatre paramètres codés selon un code décimal codé binaire sur $10^4$ points par exemple, et d'une capacité de 128 Kb. De telles unités enfichables sont commercialisées notamment en France sous la marque de commerce LERTIE et peuvent être avantageusement intégrées au dispositif de l'invention.

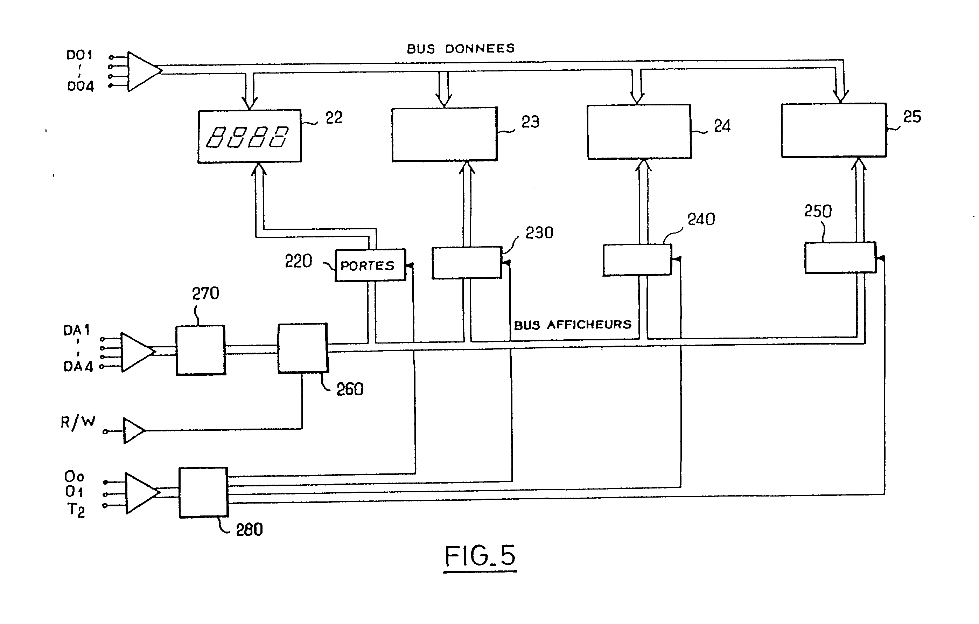

Ainsi qu'il est notamment représenté en figure 5, les moyens 2 d'affichage du niveau sonore comportent des unités d'affichage numérique 22, 23, 24, 25 reliées au BUS de données DO1 - DO4 et au BUS de commande d'adresse DA1 - DA4, par l'intermédiaire de portes numériques 220, 230, 240, 250 respectivement. Les unités d'affichage numérique étant connectées en parallèle au BUS de données précité, ainsi qu'au BUS de commande d'adresse DA1 - DA4, la sélection de l'affichage sur l'un des afficheurs précités est effectuée à partir du BUS de commande d'ordre D0 - D1 et d'un circuit intermédiaire de sélection d'affichage 280, commandant les portes 220, 230, 240, 250 et la sélection des digits à afficher sur chaque afficheur sélectionné est effectuée sur commande de l'ordre R/W, par l'intermédiaire d'un circuit de sélection de digit 260, transmettant les adresses du BUS DA1 - DA4 en coïncidence avec les données du BUS D01 - D04. Un circuit de mise en forme 270 est connecté en amont du circuit de sélection de digits 260.

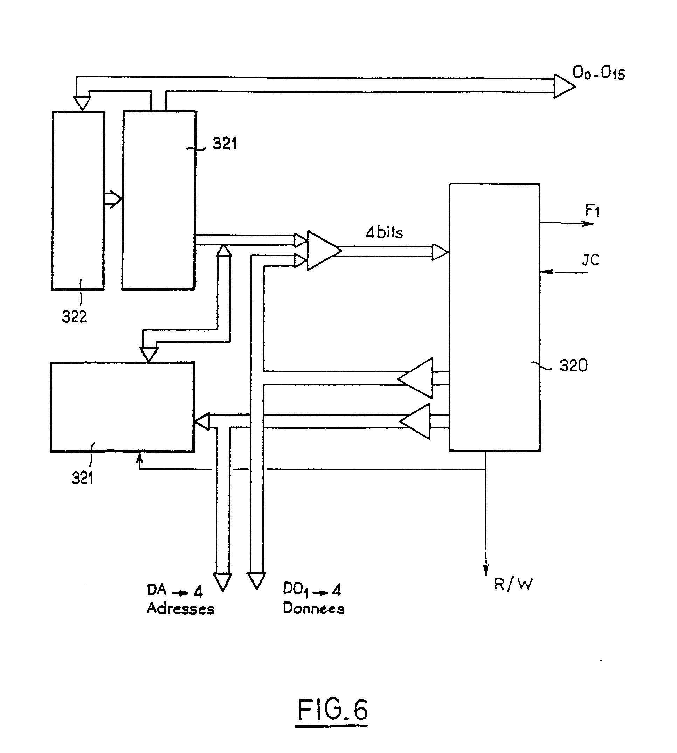

Une description simplifiée de l'unité centrale de gestion sera donnée en liaison avec les figures 6, 7 et 8.

La figure 6 représente l'implantation schématique des éléments constituant l'unité centrale. De manière classique, celle-ci peut comporter un microprocesseur 320 délivrant le signal F1 et recevant le signal JC précité, le microprocesseur 320 délivrant également le signal R/W. Ce microprocesseur peut être constitué par un microprocesseur commercialisé sous la référence NS 57 109 par la société National Semiconductors. Au microprocesseur 320 est associé, de manière classique une mémoire adressable 321, constituant pour le microprocesseur 320, la mémoire centrale ou mémoire de travail. En outre, une mémoire de type mémoire morte 321 associée à son compteur-pointeur 322 est reliée d'une part au microprocesseur 320 et à la mémoire adressable 321. Bien entendu, le microprocesseur est relié au BUS de données DO1 - DO4 et au BUS d'adresse DA1 - DA4 auquel la mémoire adressable 321 est également reliée. La mémoire morte 321 comporte un programme de gestion de l'appareil ou dispositif de l'invention, lequel est conduit par le microprocesseur 320 et transmis par le BUS de commande 00 - 015.

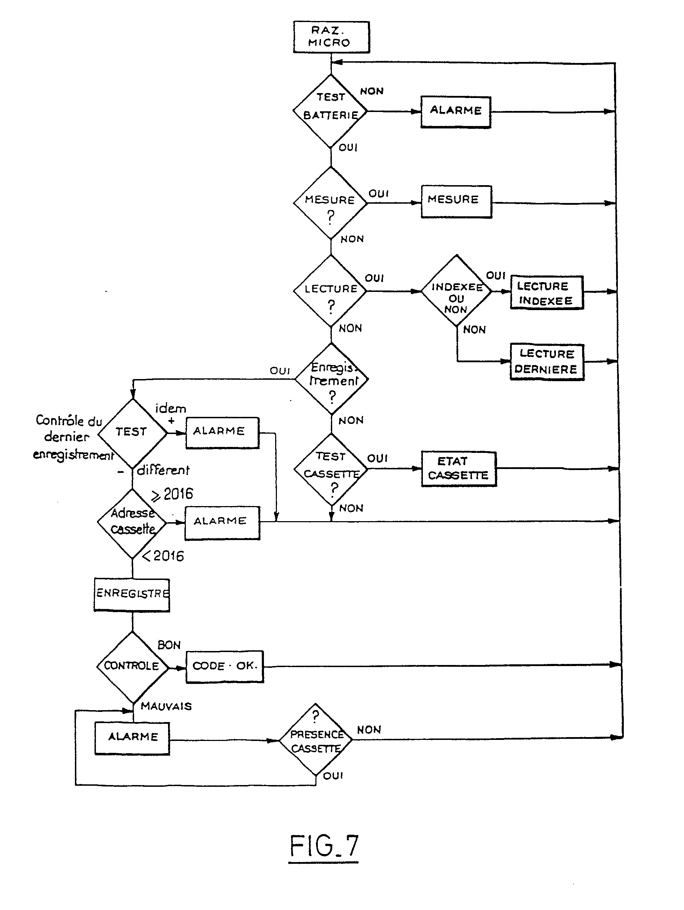

Un exemple préférentiel du programme de gestion du dispositif de l'invention sera décrit en liaison avec la figure 7.

Sur cette figure, on peut constater que la mise sous tension de l'appareil provoque un déroulement du programme dans lequel après une remise à zéro du microprocesseur 320, une série de tests sont successivement effectués, un premier test relatif à l'état de charge de la batterie d'alimentation du dispositif, un deuxième test relatif à l'existence ou la non existence de l'ordre de commande de mesure donné par l'opérateur, un troisième test relatif à la lecture des valeurs affichées, laquelle en présence de l'introduction des coordonnées du point de mesure, permet le contrôle de la variable de cartographie validée. En l'absence de l'introduction des coordonnées précitées, un ordre de lecture de la dernière coordonnée enregistrée est exécuté, puis le système est remis en position de test d'enregistrement. En l'absence d'un ordre d'enregistrement donné par l'opérateur, un test supplémentaire d'état de la cassette d'enregistrement est effectué, lequel permet le retour à état initial. Au contraire, en cas d'ordre de commande d'enregistrement donné par l'opérateur, un contrôle du dernier enregistrement est effectué entre la valeur des coordonnées enregistrées précédemment, et la valeur des coordonnées effectivement affichées est introduite par l'opérateur, au moyen des roues codeuses. En cas d'identité des coordonnées précitées, un voyant d'alarme ou tout autre système d'alarme sonore par exemple, peut être déclenché afin de prévenir l'opérateur de l'existence d'une erreur. En l'absence d'identité des coordonnées précitées, un nouveau test permet de vérifier que l'adresse d'enregistrement dans la cassette enfichable, après incrémentation par le compteur 3313 est inférieure à une valeur donnée, cette valeur étant, dans le mode de réalisation du dispositif objet de l'invention, choisie arbitrairement inférieure à 2016. En cas de test négatif, une alarme est également déclenchée avec retour à la position initiale. En cas de test positif, l'enregistrement proprement dit est effectué dans la cassette enfichable.

Un test de contrôle d'enregistrement est également effectué postérieurement à celui-ci, ce test pouvant consister en une comparaison de la valeur à enregistrer codée et de la valeur effectivement enregistrée codée selon le même code. Un test positif permet le retour à l'état initial, un test négatif permet le déclenchement d'une alarme et la vérification de la présence ou de l'absence effective de la cassette enfichable dans son logement.

En cas d'erreur d'enregistrement, un code spécial est enregistré afin de permettre l'élimination de la mesure lors d'un dépouillement des valeurs effectivement enregistrées. Ce type de test permet en particulier de tenir compte des erreurs de transfert d'information dues éventuellement à la présence de rayonnements ionisants.

On notera en outre que la fonction de lecture peut s'effectuer de deux manières qui peuvent être choisies à l'aide d'un commutateur par l'opérateur. Dans une première position du commutateur, l'appareil relit la dernière mesure qui a été enregistrée, ceci permet à l'opérateur de vérifier éventuellement le dernier point de mesure et également de se recaler après un arrêt prolongé d'enregistrement. Dans l'autre position du commutateur, l'appareil relit des mesures linéaires et pondérées, relatives à un point de coordonnées X et Y, par affichage de ce couple de valeurs sur les roues codeuses correspondantes.

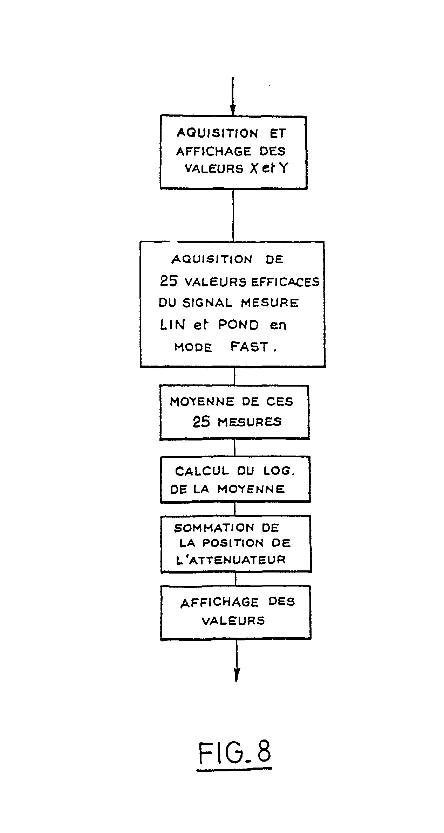

Une description détaillée du processus de mesure mis en oeuvre par le dispositif selon l'invention sera maintenant décrit en liaison avec la figure 8, ce processus de mesure proprement dit étant déclenché par le programme en cas de réponse positive au test de mesure déjà cité.

Conformément à la figure 8, l'acquisition et l'affichage ou introduction des valeurs de coordonnées X et Y dans l'exemple choisi étant effectuée, la mesure proprement dite des niveaux sonores est effectuée par acquisition de 25 valeurs efficaces délivrées par la première et la deuxième chaînes de détection, c'est-à-dire du signal mesuré linéaire et pondéré. Cette acquisition de 25 valeurs efficaces est effectuée en mode dit mode FAST, c'est-à-dire avec une fréquence d'échantillonnage suffisante, en fonction de la fréquence effective maximale possible du signal sonore dont on veut mesurer le niveau. Puis une moyenne de l'ensemble de ces 25 valeurs est effectuée, et la valeur du niveau sonore correspondant au point de mesure est définie comme le logarithme de la moyenne précédemment obtenue. La position de l'atténuateur 303 est alors prise en compte par sommation ou intégration de la valeur du signal représentatif de cette atténuation transmise à l'interface 31 pour définir la valeur de la variable de cartographie effectivement affichée.

On a ainsi décrit un dispositif de cartographie sonore à hautes performances pour lequel les risques d'erreurs ont été rendus minima. En outre, et de manière hautement avantageuse, le dispositif de l'invention tel qu'il a pu être réalisé satisfait à l'ensemble des spécifications de la norme française précitée relativement aux appareils d'enregistrement acoustique ou sonomètre des classes 2 et 3, cette norme étant en elle-même conforme et en concordance technique avec la publication 651 du Comité Electrique International.

**Revendications**

1. Dispositif de cartographie sonore comprenant des moyens de détection de niveau sonore sous forme numérisée, ledit dispositif comprenant en outre:

- des moyens (1) d'affichage, par un opérateur, des coordonnées représentatives de chaque point de l'espace de relevé de niveau sonore, les coordonnées étant engendrées sous forme numérisée,
- des moyens (2) d'affichage du niveau sonore audit point de l'espace de relevé de niveau sonore,
- des moyens (3) d'enregistrement conditionnel dudit niveau sonore et desdites coordonnées, lesdites coordonnées et le niveau sonore correspondant constituant pour chaque point de relevé la variable de cartographie sonore et l'ensemble des variables de cartographie sonore constituant l'information sonore mémorisée, lesdits moyens (3) d'enregistrement conditionnel comportant:

- une interface (31) capable d'assurer la liaison entre les circuits délivrant ladite variable de cartographie et les circuits d'enregistrement proprement dits,
- une unité centrale (32) de gestion desdites variables de cartographie recevant lesdites variables de cartographie par l'intermédiaire de ladite interface,
- un registre de mémorisation (35) desdites variables de cartographie constituant les circuits d'enregistrement proprement dits, l'enregistrement de ladite variable de cartographie étant conditionnel à un ordre de validation de l'opérateur, ledit ordre de validation déclenchant l'unité centrale (32) de gestion, l'ordre de validation ayant été donné par l'opérateur, ladite unité centrale (32), préalablement à la commande d'enregistrement proprement dit, opérant une comparaison avec l'enregistrement précédent.

2. Dispositif selon la revendication 1, dans lequel ladite interface (31) comprend un multiplexeur de données (310) recevant un signal représentatif du niveau sonore détecté sous forme numérique et un signal de valeur des coordonnées du point de relevé considéré sous forme numérique.

3. Dispositif selon la revendication 1, dans lequel ledit registre de mémorisation (33) comprend:

- un registre de commande (330) relié à l'unité centrale (32) par un bus de commande et par un bus de données,
- une unité de mémorisation et de test (331) commandée par l'unité centrale par l'intermédiaire du bus de commande, ladite unité de mémorisation recevant les variables de cartographie dudit registre de commande.

4. Dispositif selon la revendication 3, dans lequel l'unité de mémorisation et de test (331) comprend:

11

– une unité logique de contrôle (3312) commandée à partir d'un multiplexeur de commande
et de l'unité centrale de gestion,
– un compteur (3313) commandé par l'unité logique de contrôle,
– une mémoire (3314) de type mémoire morte
programmable électriquement reliée au compteur et à la logique de contrôle et destinée à
mémoriser lesdites variables de cartographie
de façon à constituer ladite information de
cartographie.

5. Dispositif selon la revendication 3, dans lequel
l'unité de mémorisation et de test (331) comprend
en outre un multiplexeur de test (3310) commandé par l'unité centrale (32) et relié à la logique de
contrôle, ledit multiplexeur de test permettant la
comparaison de la variable de cartographie courante, après validation d'enregistrement par l'opérateur, au dernier enregistrement.

6. Dispositif selon l'une des revendications précédentes, dans lequel lesdits moyens (2) d'affichage du niveau sonore comportent des unités
d'affichage numérique (22 à 25) reliées au bus
des données et au bus de commande des données, lesdits afficheurs permettant l'affichage
desdites coordonnées représentatives du point
de relevé et des valeurs efficaces du niveau sonore mesurées en mode linéaire et en mode pondéré de la variable cartographique.

7. Dispositif selon la revendication 6, dans lequel
les valeurs efficaces du niveau sonore mesurées
en mode linéaire et en mode pondéré sont affichées après moyennage sur un nombre déterminé de mesures.

8. Dispositif selon la revendication 7, dans lequel
lesdites unités d'affichage comportent:

– quatre cellules d'affichage numérique (22 à
25) reliées chacune au bus de données, chaque cellule permettant d'afficher respectivement les coordonnées du point de relevé, la
valeur du niveau en mode linéaire et pondéré,
– quatre portes de commande numérique (220,
230, 240, 250), une porte commandant une
cellule d'affichage par l'intermédiaire d'un bus
afficheur et d'une commande de sélection.

**Patentansprüche**

1. Gerät zur Schallkartographie mit digitalen
Detektoreinrichtungen für den Schallpegel, enthaltend weiterhin:

– Einrichtungen (1) zur Anzeige durch einen
Operator von Koordinaten, die für jeden
Raumpunkt der Aufnahme des Schallpegels
repräsentativ sind, wobei die Koordinaten in
digitaler Form verarbeitet werden,
Einrichtungen (2) zur Anzeige des Schallpegels am genannten Raumpunkt der Schallpe-
gelerfassung,

12

– Einrichtungen (3) zum bedingten Speichern
des Schallpegels und der genannten Koordinaten, wobei diese Koordinaten und der zuge-
hörige Schallpegel für jeden Erfassungspunkt
die Schallkartographievariable bilden und die
Gesamtheit der Schallkartographievariablen
die gespeicherte Schallinformation bilden, wobei die genannten bedingten Speichereinrichtungen (3) enthalten:

– Eine Schnittstelle (31), die in der Lage ist, die
Verbindung zwischen den Kreisen, die die genannte Kartographievariable liefern, und den
genannten Speicherkreisen herzustellen,
– eine Zentraleinheit (32) für die Verwaltung der
genannten Kartographievariablen, die die genannten Kartographievariablen über die genannte Schnittstelle erhält,
– ein Speicherregister (35) für die genannten
Kartographievariablen, das die vorgenannten
Speicherkreise bildet, wobei die Einspeicherung der genannten Kartographievariablen
von einem Validierungsbefehl des Operators
abhängt, welcher Validierungsbefehl die Ver-
arbeitungszentraleinheit (32) auslöst, der Validierungsbefehl vom Operator gegeben wird,
die Zentraleinheit (32) vor dem vorgenannten
Einspeicherungsbefehl einen Vergleich mit
der vorangehenden Einspeicherung ausführt.

2. Gerät nach Anspruch 1, bei dem die genannte
Schnittstelle (31) einen Datenmultiplexer (310)
aufweist, der ein Signal empfängt, das für den in
digitaler Form ermittelten Schallpegel repräsentativ ist, und ein Signal über die Koordinatengrößen
des betreffenden Erfassungspunktes in digitaler
Form empfängt.

3. Gerät nach Anspruch 1, bei dem das Speicherregister (3) enthält:

– Ein Befehlsregister (330), das mit der Zentraleinheit (32) über einen Befehlsbus und über
einen Datenbus verbunden ist,
– eine Speicher- und Testeinheit (331), die von
der Zentraleinheit über den Befehlsbus gesteuert wird, welche Speichereinheit die Kartographievariablen des Befehlsregisters empfängt.

4. Gerät nach Anspruch 3, bei dem die Speicher-
und Testeinheit (331) enthält:

– Eine logische Steuereinheit (3312), die von einem Befehlsmultiplexer und von der zentralen
Verarbeitungseinheit gesteuert wird,
– einen Zähler (3313), der von der logischen
Steuereinheit gesteuert wird,
– einen Speicher (3314) vom programmierbaren Festspeichertyp, der elektrisch mit dem
Zähler und mit der Steuerlogik verbunden ist
und der dazu bestimmt ist, die Kartographievariablen zu speichern, damit sie die
genannte Kartographieinformation bildet.

5. Gerät nach Anspruch 3, bei dem die Speicher- und Testeinheit (331) darüberhinaus einen Testmultiplexer (3310) enthält, der von der Zentraleinheit (32) gesteuert und mit der Steuerlogik verbunden ist, welcher Testmultiplexer den Vergleich der laufenden Kartographievariablen nach Validierung der Einspeicherung durch den Operator mit der letzten Einspeicherung erlaubt.

6. Gerät nach einem der vorhergehenden Ansprüche, bei dem die genannten Einrichtungen (2) zur Anzeige des Schallpegels numerische Anzeigeeinheiten (22 - 25) enthalten, die mit dem Datenbus und mit dem Steuerbus für die Daten verbunden sind, welche Anzeigeeinrichtungen die Anzeige der genannten Koordinaten erlauben, die für den Erfassungspunkt repräsentativ sind, sowie der wirksamen Werte der gemessenen Schallpegel in linearer Form und in gewichteter Form der Kartographievariablen.

7. Gerät nach Anspruch 6, bei dem die wirksamen Werte der gemessenen Schallpegel in linearer Form und gewichteter Form nach Mittelung über eine vorbestimmte Anzahl von Messungen angezeigt werden.

8. Gerät nach Anspruch 7, bei dem die genannten Anzeigeeinheiten enthalten:

– Vier digitale Anzeigezellen (22 - 25), die jeweils mit dem Datenbus verbunden sind, wobei jede Zelle jeweils die Anzeige der Koordinaten des Erfassungspunktes, des Pegelwertes in linearer Form und gewichteter Form erlaubt,
– vier digitale Steuertore (220, 230, 240, 250), von denen ein Tor eine Anzeigezelle mittels eines Anzeigebusses und eines Auswahlbefehls ansteuert.

## Claims

1. Sound mapping device comprising means for detecting the sound level in digitized form, the said device moreover comprising:

– means (1) for displaying, by an operator, coordinates representing each point in the area where the sound level is sampled, the coordinates being generated in digitized form,
– means (2) for displaying the sound level at the said point in the area where the sound level is sampled,
– means (3) for the conditional recording of the said sound level and of the said coordinates, the said coordinates and the corresponding sound level constituting for each sampling point the sound mapping variable and the sound mapping variables as a whole constituting the stored sound information, the said conditional recording means (3) having:

– an interface (31) capable of connecting the circuits supplying the said mapping variable and the recording circuits proper,
– a central processing unit (32) for managing the said mapping variables, receiving the said mapping variables by way of the said interface,
– a register (35) for storing the said mapping variables constituting the recording circuits proper, recording of the said mapping variable being conditional on a validation order from the operator, the said validation order triggering the managing central processing unit (32), the validation order having been given by the operator, the said central processing unit (32), before the recording command proper, carrying out a comparison with the preceding recording.

2. Device according to Claim 1, in which the said interface (31) comprises a data multiplexer (310) receiving a signal representing the detected sound level in digital form and a signal of the value of the coordinates of the sampling point concerned in digital form.

3. Device according to Claim 1, in which the said storing register (33) comprises:

– a control register (330) connected to the central processing unit (32) by a control bus and by a data bus,
– a storing and testing unit (331) controlled by the central processing unit by way of the control bus, the said storing unit receiving the mapping variables of the said control register.

4. Device according to Claim 3, in which the storing and testing unit (331) comprises:

– a control logic unit (3312) controlled from a control multiplexer and the managing central processing unit,
– a counter (3313) controlled by the control logic unit,
– a memory (3314) of the PROM type electrically connected to the counter and to the control logic and intended to store the said mapping variables so as to constitute the said mapping information.

5. Device according to Claim 3, in which the storing and testing unit (331) moreover comprises a testing multiplexer (3310) controlled by the central processing unit (32) and connected to the control logic, the said testing multiplexer enabling the current mapping variable, after validation of the recording by the operator, to be compared with the last recording.

6. Device according to one of the preceding Claims, in which the said means (2) of displaying the sound level have digital display units (22 to 25) connected to the data bus and to the data control bus, the said displays enabling the said coordinates representing the sampling point and the root mean square values of the sound level measured in linear mode and in weighted mode of the mapping variable to be displayed.

7. Device according to Claim 6, in which the root mean square values of the sound level measured in linear mode and in weighted mode are displayed after being averaged over a predetermined number of measurements.

8. Device according to Claim 7, in which the said display units have:

— four digital display cells (22 to 25) each connected to the data bus, each cell enabling the coordinates of the sampling point, the value of the level in linear mode and in weighted mode to be displayed,
— four digital control gates (220, 230, 240, 250), one gate controlling one display cell by way of a display bus and a selection control.

FIG.1

EP 0 223 682 B1

FIG.2

FIG. 3

EP 0 223 682 B1

SELECTION CARTE

$O_{12}$
$O_{15}$

34

3312

3313

3310

JC

$F_1$

3311

3314

REGISTRE DE
C de

1
2
3

$D1 \rightarrow D4$

BUS ADRESSES ET DONNÉES

FIG_4

FIG.5

$O_0 - O_{15}$

321

322

4 bits

$F_1$

JC

320

321

DA → 4
Adresses

$DO_1 → 4$
Donnees

R/W

FIG.6

FIG. 7

```
                    ┌─────────────────────┐
                    │   AQUISITION  ET     │
                    │  AFFICHAGE  DES      │
                    │  VALEURS X et Y      │
                    └─────────────────────┘
                              │
                    ┌─────────────────────────┐
                    │   AQUISITION  DE        │
                    │  25 VALEURS EFFICACES   │
                    │  DU SIGNAL MESURE       │
                    │  LIN et POND en         │
                    │  MODE   FAST.           │
                    └─────────────────────────┘
                              │
                    ┌─────────────────────┐
                    │  MOYENNE DE CES      │
                    │    25 MESURES        │
                    └─────────────────────┘
                              │
                    ┌─────────────────────┐
                    │  CALCUL DU LOG.      │
                    │  DE LA MOYENNE       │
                    └─────────────────────┘
                              │
                    ┌─────────────────────┐
                    │  SOMMATION DE        │
                    │  LA POSITION DE      │
                    │  L'ATTENUATEUR       │
                    └─────────────────────┘
                              │
                    ┌─────────────────────┐
                    │  AFFICHAGE DES       │
                    │     VALEURS          │
                    └─────────────────────┘
                              │
                              ▼
```

## FIG. 8